(19) Europäisches Patentamt / European Patent Office / Office européen des brevets

(11) **EP 2 146 457 A1**

(12) **DEMANDE DE BREVET EUROPEEN**

(43) Date de publication:
20.01.2010 Bulletin 2010/03

(51) Int Cl.:
*H04L 7/04* *(2006.01)*     *H04L 7/08* *(2006.01)*
*H04L 7/10* *(2006.01)*

(21) Numéro de dépôt: 09164950.9

(22) Date de dépôt: 08.07.2009

(84) Etats contractants désignés:
AT BE BG CH CY CZ DE DK EE ES FI FR GB GR HR HU IE IS IT LI LT LU LV MC MK MT NL NO PL PT RO SE SI SK SM TR

(30) Priorité: 18.07.2008 FR 0854888

(71) Demandeur: Teamcast
35769 Saint-Gregoire Cedex (FR)

(72) Inventeurs:
• Hostiou, Philippe
35520, LA MEZIERE (FR)
• Rousset, Olivier
35250, SAINT AUBIN D'AUBIGNE (FR)

(74) Mandataire: Le Saux, Gaël
Cabinet Vidon
Technopole Atalante
16B, rue de Jouanet
35703 Rennes Cedex 7 (FR)

(54) **Procédé de synchronisation temporelle d'un signal numérique, dispositif et produit programme d'ordinateur correspondants**

(57) L'invention concerne un procédé de synchronisation temporelle d'un signal numérique dans un système de communication par trames, chacune desdites trames comprenant des symboles d'information et au moins deux séquences de symboles de pilotes de synchronisation périodique.

Selon l'invention, un tel procédé comprend une phase de synchronisation comprenant les étapes suivantes :
- suréchantillonnage d'un signal reçu, suivant un facteur de suréchantillonage $K$, délivrant $K$ échantillons de durée $Te$ pour un temps symbole $Ts$ ;
- obtention d'une information de sélection pour chaque échantillon, à l'aide d'une fonction prédéterminée $X()$ tenant compte dudit échantillon et d'au moins un échantillon reçu précédemment ;
- comparaison desdites informations de sélection avec un motif de référence connu $Mo$ et
- sélection de l'instant d'échantillonnage d'un desdits échantillons comme point de synchronisation, en fonction des résultats desdites comparaisons ; lesdites séquences étant prédéfinies, à l'émission, de façon que leur combinaison à l'aide de ladite fonction maximise au moins une caractéristique de ladite information de sélection, lorsque la synchronisation est correcte.

Figure 1

**Description**

**1 DOMAINE DE L'INVENTION**

La présente invention se rapporte au domaine de la synchronisation de signaux de données numériques.

Plus particulièrement, la présente invention concerne un procédé permettant la synchronisation temporelle et la détection de début de blocs temporels pour des transmissions par trame.

Le procédé de l'invention peut notamment être mis en oeuvre lors de transmissions par trames ou paquets pour des applications de télécommunication et de diffusion par satellite et par des liaisons faisceaux hertziens ou des liaisons radio fixes ou mobiles.

La synchronisation temporelle ou la détection de début de trame dans un signal est un point délicat de la transmission de données en mode trame ou paquet, surtout pour les nouvelles applications de communications multimédia à débit élevé. Ainsi, l'opération de synchronisation temporelle doit pouvoir fonctionner dans des conditions de plus en plus difficiles en terme notamment de puissance du signal reçue, et de précision de calage fréquentiel de la fréquence porteuse.

De plus, en règle générale, l'opération de synchronisation temporelle d'un signal prend place après une opération de synchronisation fréquentielle grossière. Ces deux opérations se rebouclent l'une avec l'autre, apportant par voie de conséquence un temps de synchronisation assez élevé et donc pénalisant pour des applications demandant des temps de réaction très brefs.

Les nouveaux standards de diffusion ou de télécommunication par exemple, incorporent des constellations QPSK (de l'anglais « Quadrature Phase Shift Keying »), mais aussi de dimensions plus élevées : 8 PSK, 16 PSK, 16 APSK, 32 APSK, pour augmenter le nombre d'informations utiles transmises, avec des codes correcteurs d'erreurs turbo, exigeant ainsi de la part du récepteur de fonctionner en réception cohérente, à des points de fonctionnement faibles, c'est-à-dire à des rapports signal à bruit SNR (de l'anglais « Signal to Noise Ratio ») faibles. De tels rapport SNR se situent à des niveaux de l'ordre de SNR=-3 dB pour une constellation QPSK, SNR=5 dB pour une 8 PSK, avec des décalages fréquentiels liés à la désynchronisation entre les oscillateurs locaux et le Doppler créés par des communications mobiles.

Ces mêmes standards permettent de plus l'émission de différents programmes répartis temporellement dans le signal et demandant au récepteur qui souhaite les mettre en oeuvre de basculer rapidement d'un programme à un autre.

Il donc nécessaire d'avoir des temps de synchronisation très rapides lorsque le récepteur bascule d'un programme à un autre, et ce même dans des conditions de point de fonctionnement faibles.

Pour accélérer la synchronisation, ces nouveaux standards utilisent des communications par trame comprenant des symboles connus dits pilotes. Des algorithmes de synchronisation sont alors mis en oeuvre au sein du récepteur en se basant sur le principe du critère du maximum de vraisemblance pour repérer les symboles pilotes et accélérer la synchronisation.

Les trames émises à destination des récepteurs sont alors construites en insérant une ou plusieurs séquences pilotes entre des données, puis en répétant ces séquences avec une règle de périodicité connue. La ou les séquences pilotes sont connues du récepteur puisqu'elles sont définies par le standard lui même.

Les séquences connues ont de bonnes propriétés d'intercorrélation, notamment un nombre de pics secondaires limités permettant de se décider sans se tromper. Elles peuvent être construites par exemple en multipliant chaque symbole complexe connu fixé par un symbole déduit d'une séquence complexe aléatoire crée à partir d'une séquence de « Gold ».

**2 SOLUTIONS DE L'ART ANTERIEUR**

2.1 Art antérieur

Comme cela a déjà été évoqué, il est de plus en plus important de pouvoir réaliser une synchronisation ou une détection de blocs rapide à des points de fonctionnement faibles en termes de rapport signal à bruit SNR, même dans le cas de mobilité (par exemple réception multimédia dans un véhicule). Ces besoins s'expriment tant en transmission par satellite qu'en transmission par l'intermédiaire de faisceaux hertziens ou de liaison radios.

Ainsi, par exemple, en satellite, un récepteur doit pouvoir fonctionner autour d'un SNR=-3 dB pour des communications par paquets avec une constellation QPSK.

Pour faciliter ce fonctionnement à des SNR faibles, une solution communément admise est de choisir une communication par trames avec une ou plusieurs séquences pilotes connues et répétées pour diminuer le temps de convergence et à la synchronisation temporelle à faible rapport signal à bruit. Ces techniques dites PA (de l'anglais «Pilot Aided » pour «Aidée par Pilotage ») se différentient des techniques à l'aveugle NDA (Non Data Aided).

### 2.1.1 Techniques à l'aveugle

Pour les techniques dites à l'aveugle, par exemple pour les applications satellite, l'algorithme de Gardner et l'algorithme de Meyr sont utilisés. L'algorithme de Gardner utilise les passages à zéros du signal reçu tandis que l'algorithme de Meyr récupère l'écart temporel en créant une non linéarité qui apporte un signal périodique fournissant l'information d'écart temporel.

De tels algorithmes fonctionnent toujours en association avec des algorithmes de calage fréquentiels, la précision de l'algorithme fréquentiel impactant directement sur le fonctionnement et la précision de l'algorithme de synchronisation temporelle. Dans la plupart des cas, notamment pour des communications multimédia par satellite, un rebouclage entre les deux algorithmes est mis en oeuvre pour avoir au bout d'un certain temps une convergence suffisante qui permet de prendre une décision sur le calage temporel et sur le calage fréquentiel.

### 2.1.2 Techniques PA

Les techniques PA utilisent des séquences pilotes connues mises dans la trame. L'algorithme utilisé au niveau du récepteur est un algorithme qui fait une estimation au sens du maximum de vraisemblance de la séquence du motif de référence recherché.

Ces techniques permettent au récepteur de diminuer son temps d'accrochage, et de travailler à plus faible rapport signal à bruit lorsque le nombre de symboles dans le motif est suffisant, et lorsque la répétition des séquences pilotes est convenablement choisie pour l'application visée de part le canal de propagation que subira le signal émis.

Des techniques PA sont utilisées pour de la synchronisation temporelle dans les systèmes de radio cellulaire comme le GSM ou le WiMax. Elles travaillent avec des symboles connus regroupés selon une certaine règle qui définissent une séquence connue avec de bonnes propriétés d'intercorrélation, celle-ci est émise et répétée suivant un certain rythme. Pour ces applications, une synchronisation fréquentielle est effectuée en premier lieu grâce à une trame particulière « FCH » (de l'anglais « Fréquency Correction Channel » pour « Canal de Corrélation Fréquentiel ») qui dans le principe envoie une fréquence pure, puis une synchronisation temporelle est réalisée grâce à une trame particulière dite « SCH ».

D'autres techniques PA sont aussi utilisées dans des standards comme dans le DVB S2 ou le DVB SH mode TDM. Pour le standard DVB S2, une séquence de pilotes est répétée afin de faciliter l'estimation de la phase. Cette séquence est codée différentielle à l'émetteur. Ce n'est pas le cas pour le standard DVB SH. Pour le DVB SH la trame a deux séquences pilotes qui se répartissent régulièrement entre des blocs de données. Ces séquences sont plus longues que dans le cas DVB S2 et ne sont pas codées différentiellement à l'émetteur.

Ces dernières techniques PA, utilisent des séquences pilotes avec de bonnes propriétés d'intercorrélation, c'est-à-dire avec des pics secondaires peu importants. Elles appartiennent aux techniques PA qui travaillent à partir de trames reçues comprenant des données entrecoupées de séquences pilotes définies par le standard et répétées temporellement périodiquement ou non.

Par exemple, dans le standard DVB SH mode TDM, les deux séquences pilotes complexe répétées sont construites à partir d'une séquence binaire complexe déduite d'une séquence de Gold avec une fonction d'intercorrélation avec un pic principal très prononcé, et des pics secondaires au nombre faible, et très atténués.

### 2.2 Inconvénients de l'art antérieur

Les techniques à l'aveugle et les techniques PA présentent des inconvénients.

Par exemple, l'algorithme de Gardner utilisé dans les techniques à l'aveugle fonctionne bien pour un rapport signal à bruit raisonnable mais nécessite un temps d'acquisition important et, de la même façon que l'algorithme de Meyr, est sensible aux décalages fréquentiels. Aussi ces derniers algorithmes nécessitent une synchronisation fréquentielle grossière en aval.

Un rebouclage entre ces deux dernières opérations (synchronisation temporelle et synchronisation fréquentielle) est couramment réalisé et demande un temps de convergence, donc un temps d'acquisition assez élevé. De plus, il est d'autant plus élevé que le rapport signal à bruit devient négatif. Ce temps devient donc trop important pour certaines applications.

De plus, l'algorithme de Gardner et l'algorithme de Meyr étant à l'aveugle, ils ne peuvent donc apporter aucune information sur la trame, notamment le début d'un bloc répétitif de la trame comme par exemple le début de la séquence pilote de synchronisation connue.

D'une manière générale, les techniques à l'aveugle ne permettent pas d'apporter des informations quant à la trame, notamment le début d'un bloc répétitif de la trame comme par exemple le début de la séquence pilote de synchronisation connue.

Les techniques PA présentent elles aussi des inconvénients. En effet, dans ces techniques PA, utilisée par exemple GSM ou WiMax, une séquence connue (pilote) est émise sur une trame particulière. Le récepteur utilise alors une technique PA.

Un module de calage fréquentiel aidé par une trame réservée sur le canal de synchronisation (« SCH », de l'anglais « Synchronization Channel ») est nécessaire en aval puisque l'algorithme n'arrive à fonctionner qu'avec un écart fréquentiel inférieur environ à $10^{-3}/Ts$, avec « Ts » étant la fréquence de réception des symboles du signal, un ensemble de symboles formant une trame. Les techniques PA nécessitent donc la mise en oeuvre d'un calage fréquentiel supplémentaire, ce qui n'est pas pratique.

**3 OBJECTIFS DE L'INVENTION**

L'objectif de l'invention est de permettre une synchronisation temporelle rapide. Un autre objet de l'invention est de réaliser rapidement une acquisition des débuts des trames. Un autre objet de l'invention est de permettre la synchronisation et l'acquisition à un point de fonctionnement très faible en terme de rapport signal à bruit, par exemple de l'ordre de -3dB.

Un autre objet de l'invention est de disposer d'un procédé de synchronisation temporelle qui ne dépend pas de la précision d'un procédé de synchronisation fréquentielle.

**4 RESUME DE L'INVENTION**

L'invention ne présente pas les inconvénients de l'art antérieur. En effet, l'invention concerne un procédé de synchronisation temporelle d'un signal numérique dans un système de communication par trames, chacune desdites trames comprenant des symboles d'information et au moins deux séquences de symboles de pilotes de synchronisation périodique.

Selon l'invention, un tel procédé comprend une phase de synchronisation comprenant les étapes suivantes :

- suréchantillonnage d'un signal reçu, suivant un facteur de suréchantillonage $K$, délivrant $K$ échantillons de durée $Te$ pour un temps symbole $Ts$ ;
- obtention d'une information de sélection pour chaque échantillon, à l'aide d'une fonction prédéterminée $X()$ tenant compte dudit échantillon et d'au moins un échantillon reçu précédemment ;
- comparaison desdites informations de sélection avec un motif de référence connu $Mo$ et
- sélection de l'instant d'échantillonnage d'un desdits échantillons comme point de synchronisation, en fonction des résultats desdites comparaisons ;

lesdites séquences étant prédéfinies, à l'émission, de façon que leur combinaison à l'aide de ladite fonction maximise au moins une caractéristique de ladite information de sélection, lorsque la synchronisation est correcte.

Ainsi l'invention propose une méthode de synchronisation temporelle pour des communications par trame ou paquet qui fonctionne à faible rapport signal à bruit, qui résiste aux décalages fréquentiels, et a un comportement régulier pour tout décalage fréquentiel, et est donc bien adapté aux applications avec mobilité, (c'est-à-dire avec du Doppler, avec des signaux à des débits suffisamment élevés).

Un tel résultat est obtenu, selon l'invention, en combinant l'utilisation de deux séquences de symboles pilote de synchronisation qui sont présentes dans une trame et la comparaison d'information de sélection obtenues à partir de ces séquences de symboles pilote transformées avec un motif de référence connu.

L'invention permet également de détecter en même temps que l'instant d'échantillonnage pour la synchronisation, les débuts des séquences pilotes répétées temporellement même en présence de forts décalages fréquentiels car la séquence se suffit à elle-même pour se synchroniser. Ainsi, un décalage de fréquence n'a pas d'effet.

L'invention permet également d'éviter un rebouclage entre les algorithmes de synchronisation fréquentielle et de synchronisation temporelle pour des applications avec des bandes passantes largement plus élevées que le Doppler, et donc permet des temps d'acquisition très faibles.

L'invention permet encore une grande souplesse sur le choix de l'architecture du récepteur, puisqu'elle évite dans certaines situations un module de synchronisation fréquentielle en aval d'un module de synchronisation temporelle, et ainsi permet de placer un module de synchronisation fréquentielle en amont du module de synchronisation temporelle.

L'invention permet également d'avoir une rapidité de réponse de la synchronisation temporelle.

Selon une caractéristique particulière de l'invention, pour chaque échantillon :

- ladite fonction prédéterminée $X()$ comprend une étape de multiplication dudit échantillon par le conjugué d'un échantillon précédent, délivrant un échantillon transformé ;
- ladite étape de comparaison comprend une étape de calcul d'une corrélation entre ledit échantillon transformé et ledit motif préalablement connu $Mo$.

Selon un mode de réalisation particulier de l'invention, ladite phase de synchronisation comprend en outre une étape de cumul de desdites corrélations correspondant à au moins deux temps symbole successifs, au sein d'une structure de données de cumul de corrélation stockant des quantités *RT* de corrélations cumulées pour chaque échantillon, et en ce que ladite étape de sélection tient compte desdites quantités *RT*.

Selon une caractéristique particulière de l'invention, pour chaque échantillon à un temps d'échantillonnage *Te* ladite fonction prédéterminée *X()* vaut :

$$X(nTe) = r(nTe) * conjugue(r(nTe - xTs)$$

où :

- *r(nTe)* est le nième échantillon reçu au temps *Te* ;
- *r(nTe-xTs)* est le nième échantillon reçu au temps Te retardé d'une valeur entière *x* fois le temps *Ts*.

Selon une caractéristique particulière de l'invention, ladite valeur de retard *x* vaut 1.

Selon un mode de réalisation particulier de l'invention, pour un échantillon donné, ladite corrélation est une enveloppe de corrélation d'un nombre complexe.

Ainsi, le calcul de l'enveloppe de corrélation peut être réalisé à l'aide de la fonction générale suivante :

$$R_i(j) = \sum_{k=1}^{P1} \left\| x_i(k+j) * motif^*(k) \right\| + \sum_{k=I1+P1+1}^{I1+P1+P2} \left\| x_i(k+j) * motif^*(k) \right\| + \sum_{k=I1+P1+P2+I2+1}^{I1+P1+P2+I2+P3} \left\| x_i(k+j) * motif^*(k) \right\| + ...$$

dans laquelle :

- i varie de 0 à K-1 ;
- j varie de 0 à P1+I1+P2+....Pn-1 et dans lequel :

  - Le premier champ pilote est de longueur P1 ;
  - Le deuxième champ pilote est de longueur P2 ;
  - Le troisième champ pilote est de longueur P3 ;
  - Le premier champ d'information entre le premier champ pilote et le second est de longueur I1 ;
  - Le deuxième champ d'information entre le deuxième champ pilote et le troisième est de longueur I2 ;
  - etc.

Selon cette précédente fonction, le motif Mo est étalé sur

$$P1+I1+P2+I2+.....+Pn$$

De manière plus précise, lorsque P1 et P2 ont une longueur de 80 symboles et I1 à une longueur de 1008 symboles, la trame comprend un champ P1 puis un champ I1 puis un champ P2 puis un champ I2 alors la fonction de calcul de l'enveloppe de corrélation est la suivante :

$$R_i(j) = \sum_{k=1}^{80} \left\| x_i(k+j) * motif^*(k) \right\| + \sum_{k=1089}^{1168} \left\| x_i(k+j) * motif^*(k) \right\| \quad 0 \le j \le 2176 - 1$$

Selon un mode de réalisation particulier de l'invention, ledit procédé comprend en outre une phase de contrôle de synchronisation en continu par estimation en utilisant lesdits symboles d'information et ledit instant d'échantillonnage préalablement déterminé.

Selon une caractéristique particulière de l'invention, ladite phase de contrôle de synchronisation par estimation comprend les étapes suivantes :

- suréchantillonnage d'un signal reçu, suivant un facteur de suréchantillonage *K*, délivrant au moins deux échantillons à un temps d'échantillonnage *Te* pour une durée correspondant à un temps symbole *Ts* ;
- obtention d'une information de sélection pour chaque échantillon, à l'aide d'une fonction prédéterminée *X()* tenant compte dudit échantillon et d'au moins un échantillon reçu précédemment ;
- comparaison desdites informations de sélection avec un motif de référence connu *Mo* et
- sélection de l'instant d'échantillonnage d'un desdits échantillons comme point de synchronisation, en fonction des résultats desdites comparaisons et dudit instant d'échantillonnage préalablement déterminé.

Ainsi, l'invention permet de réduire le temps nécessaire au suivi de la synchronisation. En effet, plutôt que de calculer de multiples corrélations, l'invention permet de ne calculer que les corrélations qui se situent autour d'un point de la séquence de symbole qui correspondre au point de synchronisation préalablement déterminé lors de la synchronisation initiale et non pas de recommencer tous les calculs pour s'assurer du maintien de la synchronisation.

L'invention concerne également un signal numérique destiné à être émis par au moins un émetteur et reçu par au moins un récepteur mettant en oeuvre le procédé de synchronisation tel que décrit précédemment, dans un système de communication par trames, chacune desdites trames comprenant des symboles d'information et au moins deux séquences de symboles pilotes de synchronisation P0 et P1.

Selon l'invention, un dans un tel signal lesdites séquences de symboles pilotes de synchronisation P0 et P1 sont choisies de façon qu'elles maximisent un résultat d'un calcul de corrélation entre des échantillons desdits symboles de pilotes et un motif de référence connu Mo à l'aide d'une fonction prédéterminée.

L'invention concerne également un procédé de construction d'un signal numérique tel que décrit précédemment, dans un système de communication par trames, chacune desdites trames comprenant des symboles d'information et au moins deux séquences de symboles de pilotes de synchronisation *P0* et *P1*,

Selon l'invention, un tel procédé de construction comprend une étape de détermination desdites séquences de symboles pilotes de synchronisation P0 et P1 de façon qu'elles maximisent un résultat d'un calcul de corrélation entre des échantillons desdits symboles de pilotes et un motif de référence connu *Mo* à l'aide d'une fonction prédéterminée.

Selon une caractéristique particulière de l'invention, **caractérisé en ce que** ladite étape de détermination met en oeuvre le calcul suivant :

$$p0, n = \exp(j\pi/4) * Cn \quad 1 \le n \le P$$

$$p1, n = \exp(j\pi/4) * Cn \quad P + I + 1 \le n \le P + I + P$$

dans lequel :

- « P » est le nombre de symboles qui composent respectivement les symboles *P0* et *P1* ;
- « I » est le nombre de symboles de données d'information d'une trame ;
- « *Cn* » est le *n*$^{ième}$ symbole complexe d'une séquence déduite d'une séquence de Gold de longueur $2^{18}-1$ ;
- « j » étant la notation imaginaire d'un nombre complexe.

L'invention concerne également un dispositif de synchronisation temporelle d'un signal numérique dans un système de communication par trames, chacune desdites trames comprenant des symboles d'information et au moins deux séquences de symboles de pilotes de synchronisation.

Selon l'invention, un tel dispositif comprend des moyens de synchronisation comprenant des moyens de :

- suréchantillonnage d'un signal reçu, suivant un facteur de suréchantillonage *K*, délivrant au moins deux échantillons à un temps d'échantillonnage *Te* pour une durée correspondant à un temps symbole *Ts* ;
- obtention d'une information de sélection pour chaque échantillon, à l'aide d'une fonction prédéterminée *X()* tenant compte dudit échantillon et d'au moins un échantillon reçu précédemment ;
- comparaison desdites informations de sélection avec un motif de référence connu *Mo* et
- sélection de l'instant d'échantillonnage d'un desdits échantillons comme point de synchronisation, en fonction des résultats desdites comparaisons.

Selon un autre aspect, l'invention concerne également un produit programme d'ordinateur téléchargeable depuis un réseau de communication et/ou stocké sur un support lisible par ordinateur et/ou exécutable par un microprocesseur, et comprenant des instructions de code de programme pour l'exécution du procédé de synchronisation tel que décrit précédemment.

## 5 LISTE DES FIGURES

D'autres caractéristiques et avantages de l'invention apparaîtront plus clairement à la lecture de la description suivante d'un mode de réalisation préférentiel, donné à titre de simple exemple illustratif et non limitatif, et des dessins annexés, parmi lesquels :

- la figure 1 présente un synoptique du procédé de l'invention ;
- la figure 2 présente le principe de construction d'un motif Mo ;
- la figure 3 présente l'intercorrélation du motif en fonction du retard ;
- la figure 4 est un exemple de définition de trame.

## 6 GLOSSAIRE

- Ts : fréquence de réception des symboles du signal ;
- Trame : elle est constituée d'une suite de symboles d'informations entrecoupée de séquences de pilotes de synchronisation réparties périodiquement ;
- Séquences de pilotes de synchronisation : elles sont connues lors de la mise en oeuvre du procédé de l'invention car elles font parties de la norme mis en oeuvre. La séquence est composée d'une suite de symboles connus ;

## 7 DESCRIPTION DETAILLEE DE L'INVENTION

### 7.1 Rappel du principe de l'invention

L'invention propose de réaliser une synchronisation temporelle qui ne nécessite pas obligatoirement de synchronisation fréquentielle préalable et qui diminue le temps nécessaire au traitement sous la forme d'un procédé de synchronisation temporel qui effectue des transformations et des calculs sur les séquences de symboles reçues. Le procédé de synchronisation temporel proposé par l'invention permet de synchroniser temporellement un récepteur en supportant des écarts fréquentiels élevés quelconque et ceci même à très faible rapport signal à bruit (RSB ou SNR) dans un système de communications par trame constituée d'une suite de symboles d'informations entrecoupées de séquences pilotes réparties périodiquement. Le procédé de l'invention est particulièrement adapté à la mise en oeuvre d'applications temps réel exigeantes, le tout en conditions de mobilité.

L'invention concerne également un dispositif qui comprend des moyens de mise en oeuvre de la synchronisation temporelle selon l'invention.

Le principe général de l'invention repose sur l'utilisation d'une ou plusieurs hypothèses temporelles préalables et sur l'utilisation d'une information sur la présence périodique d'un motif connu au préalable du récepteur et qui possède de bonnes propriétés de corrélation.

L'invention concerne également, à part entière, ce motif qui possède de bonnes propriétés de corrélation de part sa construction directement déduite des travaux réalisés par les inventeurs. En effet, ce motif particulier selon l'invention possède de bonnes propriétés d'intercorrélation, avec en particulier une fonction d'intercorrélation qui comporte peu de pics secondaires.

Le principe de l'invention consiste ainsi à rechercher des instants d'échantillonage à partir d'une transformation qui est appliquée à des symboles reçus et des calculs de corrélation avec un motif préalablement constitué.

L'invention permet d'obtenir un temps d'acquisition et de synchronisation très faible, fonctionnant à des rapports signal à bruit négatifs, sans besoin de travailler en association avec un algorithme de synchronisation fréquentielle pour certaines applications comme des applications satellite multimédia.

De plus, l'invention permet de déterminer en même temps l'instant d'échantillonnage et permet de déterminer de la trame, c'est-à-dire le début des motifs répétés pour des applications avec une trame comprenant un motif répété.

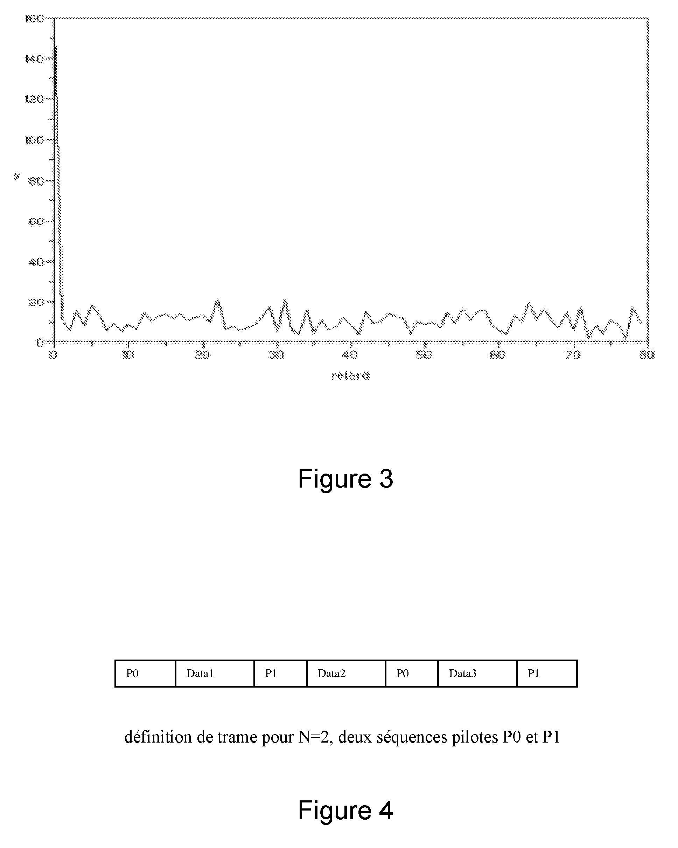

De plus, à la différence des techniques PA de l'art antérieur, la solution ici proposée n'a pas besoin ni d'une trame réservée, ni d'un préambule en début de communication, ni d'un module de synchronisation fréquentielle en aval pour un écart fréquentiel jusqu'à $10^{-1}/Ts$ (« Ts » étant la fréquence de réception des symboles qui composent le signal, par exemple 1 symbole toutes les microsecondes et lesdits symboles étant compris dans les trames). En effet, l'invention est adaptée à une communication avec un seul type de trames comprenant à la fois des symboles d'information et à la fois un motif répété connu, telle que présentée en figure 4.

Cette solution permet d'envisager différentes articulations entre un module de synchronisation fréquentielle et un module de synchronisation temporelle qui met en oeuvre le procédé de l'invention, celui-ci pouvant se trouver en aval ou en amont de l'autre module, selon l'application visée. Il n'est cependant pas obligatoire, selon l'invention, de réaliser une quelconque synchronisation fréquentielle préalable.

Le procédé exposé permet en outre de fournir directement le début des blocs élémentaires de la trame, et même le début de la trame, en autorisant un écart de fréquence résiduel élevé.

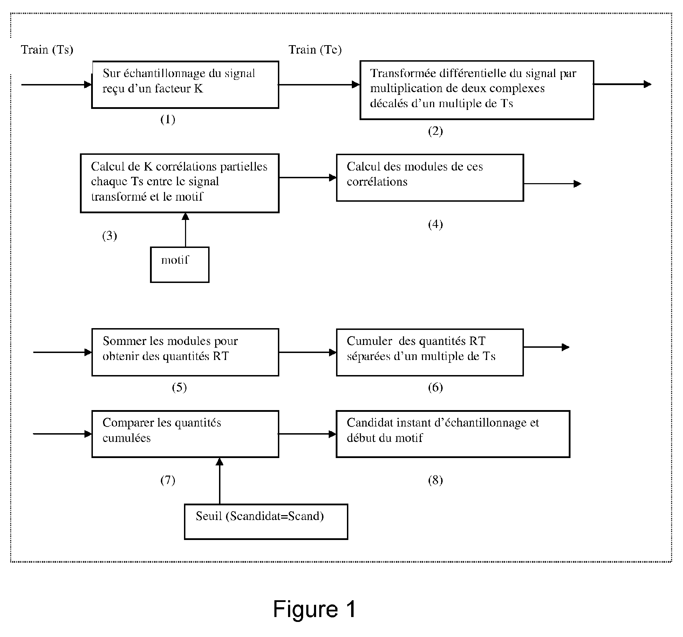

On présente, en relation avec la figure 1, le principe général du procédé de synchronisation selon l'invention. Le procédé comprend une phase de synchronisation initiale et une phase de synchronisation en continu.

La phase de synchronisation initiale comprend :

- une étape de réception d'une suite de symboles. Cette suite de symbole constitue le signal et est reçue en continu. Cette suite de symbole, également appelée « train entrant » est reçue au rythme *Ts* ;

- une étape de transformation (par exemple un suréchantillonnage $Te = \dfrac{Ts}{k}$ ) du train entrant à un rythme *Te*, *Ts* étant un multiple de *Te*, en multipliant chaque symbole du train entrant par le conjugué d'un symbole retardé d'un nombre entier de *Ts*, noté « *décal* », « *décal* » étant de préférence égal à 1, pour obtenir une nouvelle séquence de symboles *X()* au rythme *Te*,

- par fenêtre glissante de *Te*, une étape de calcul de corrélations partielles complexes entre la séquence *X()* et un motif *Mo* préalablement constitué, et une étape d'addition des enveloppes ou des modules desdites corrélations permettant d'obtenir des quantités *R* ;

- une pluralité d'étapes de cumul desdites quantités *R*, au sein de quantités cumulée *RT* pour chaque échantillon en fonction d'un paramètre de cumul « *NRep* » dépendant des conditions de réception ;

- une étape de décision, à l'aide des quantités *RT* par une règle de décision, par exemple en identifiant la valeur maximale de *RT* pour chaque échantillon. Lorsque cette valeur maximale dépasse un seuil, l'instant d'échantillonnage correspondant est retenu comme candidat potentiel d'instant d'échantillonnage, et l'indice de temps « *indice_temps* » auquel il est associé est mémorisé.

Par exemple, si *Ts* est égal à une microseconde, c'est-à-dire que l'on reçoit un symbole toute les microsecondes, et que l'on suréchantillonne *Ts* d'un facteur 4, alors *Te* vaut ¼ de microseconde et on a quatre échantillons pour un symbole reçu. Les étapes précédemment décrites visent à identifier un motif connu à partir des échantillons (qui ont subi la transformation) et réaliser ainsi la synchronisation temporelle.

Le paramètre de cumul « *NRep* » varie en fonction des conditions de réception. Dans le cas où les conditions de réception sont bonnes, « *NRep* » vaut 0 car il n'est pas nécessaire de faire un cumul pour obtenir le début de la trame. Même à faible SNR, le pic peut être détecté, mais le principe d'accumulation de valeurs permet de fiabilisé la détection de pic. Cela ne veut pas dire cependant, que le premier pic détecté n'est pas le bon.

La phase de synchronisation en continu comprend sensiblement les mêmes étapes que celles de la synchronisation initiale, à la différence qu'il n'est pas nécessaire de cumuler les quantités *R* un nombre aussi important de fois que pour la synchronisation initiale. Le nombre de cumuls « *NRep* » est alors remplacé par une valeur inférieure « *NDmotif* ». De plus, seules quelques quantités R sont examinées : il s'agit des quantités qui se situent sensiblement aux instants d'échantillonnage, c'est-à-dire à l'instant d'échantillonnage ou juste avant ou juste après.

7.2 Description d'un mode de réalisation

7.2.1 Définition de la trame

On rappelle que l'invention se rapporte à un procédé adapté notamment à une transmission par trame composée de champs pilotes et de champs de symboles d'information. La trame est définie par le standard de communication et l'invention ne modifie en rien la définition de cette trame. En effet la synchronisation temporelle est réalisée à la réception du signal et les trames ont déjà été composées par l'émetteur en fonction de la norme de diffusion mis en oeuvre.

La trame peut être vue par une succession régulière ou non de champs pilotes et de champs d'information. La régularité de la succession rend cependant la trame plus optimum. Dans ce mode de réalisation particulier de l'invention, il y a N séquences pilotes et chacune est de longueur P. Les données d'informations sont de longueurs I entrecoupées par les séquences pilotes de longueur P. Les N séquences pilotes sont répétées régulièrement au cours du temps.

Selon l'invention, une séquence pilote de synchronisation peut être multipliée symbole par symbole par une séquence déterminée de longueur de préférence N*P afin d'obtenir une séquence de symboles pilotes avec de bonnes propriétés d'intercorrélation.

Dans ce mode de réalisation préférentiel, N a la valeur 2 et P a la valeur 80. La trame résultante est illustrée en figure 4. La séquence pilote de synchronisation est construite de la manière suivante :

Les champs P0 et P1 sont de même longueur P et chacun de ces champs P0 et P1 sont séparés par des symboles représentant les données d'information transmise de longueur I. Selon l'invention, les « P » symboles qui composent respectivement ces champs P0 et P1 sont les suivants :

$$p0, n = \exp(j\pi/4) * Cn \quad 1 \le n \le P$$

$$p1, n = \exp(j\pi/4) * Cn \quad P + I + 1 \le n \le P + I + P$$

« $Cn$ » est le $n^{ième}$ symbole complexe d'une séquence déduite d'une séquence de Gold de longueur $2^{18}$-1, bien connue de l'homme du métier. Dans ce mode de réalisation, les pilotes se présentent sous la forme de deux blocs P0 et P1. Ces deux blocs sont répétés dans la trame de manière régulière.

- P0(1) = exp (j $R_0$ (i-1) $\pi$/2+ j $\pi$/4) pour le bloc P0 avec i=[1,..., 80]
- P1(i)= exp (j $R_0$ (i-1) $\pi$/2+ j $\pi$/4) pour le bloc P1 avec i=[1089,..., 1168]

Avec :

- R0(i) = 2 $z_0$((i + 131 072) modulo ($2^{18}$-1)) + $z_0$(i) i = 0, 1, ...,$2^{18}$-1
- $z_0$ (i) = [x((i) modulo ($2^{18}$-1)) + y(i)] modulo 2, i = 0,..., $2^{18}$-2 et :

- x(0) = 1, x(1) = x(2) = ... = x(16) = x(17) = 0.
- y(0) = y(1) = ... = y(16) = y(17) =1
- x(i+18) = x(i+7) + x(i) modulo 2, i = 0, ... , $2^{18}$ - 20.
- y(i+18) = y(i+10) + y(i+7) + y(i+5) + y(i) modulo 2, i = 0, ..., $2^{18}$-20.

### 7.2.2 Définition de la transformation adaptée à la trame (étape de transformation du procédé de l'invention)

Comme cela a déjà été explicité, le procédé de l'invention réalise une transformation sur les symboles reçus au rythme *Te* après qu'un suréchantillonage ait été réalisé sur les symbole reçus.

Dans ce mode de réalisation de l'invention, la transformation consiste en une multiplication du symbole reçu *r(nTe)* au rythme *Te* courant par le conjugué du symbole retardé d'un nombre entier de *Ts*, de préférence *Ts,* pour obtenir une nouvelle séquence de symboles *X()* au rythme *Te.* Cette transformation peut s'écrire comme suit :

$$X(nTe) = r(nTe) * conjugue(r(nTe - Ts)$$

### 7.2.3 Définition du motif

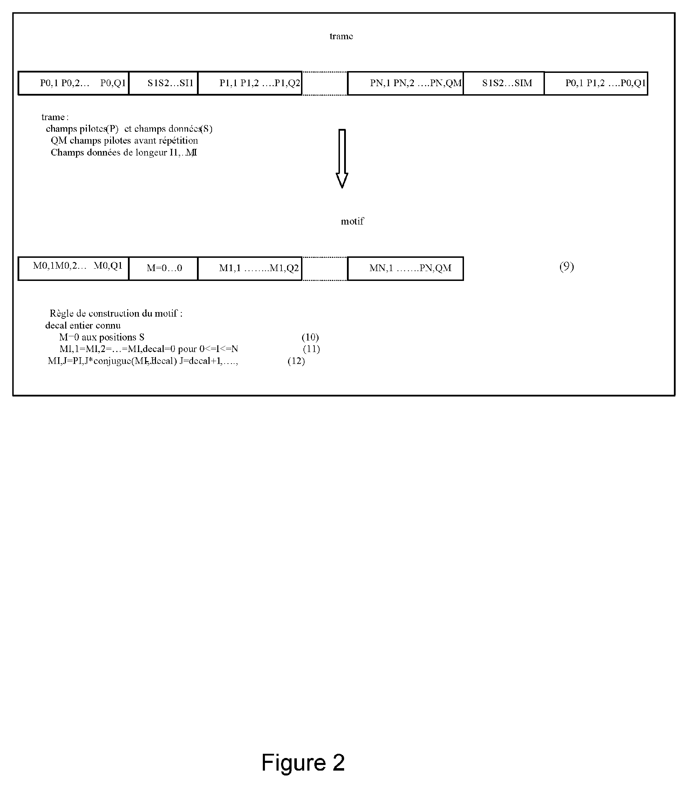

L'invention définit la construction d'un motif utilisé au récepteur. Ce motif est construit à partir de la définition de l'émetteur. Un exemple d'un tel motif est présenté en relation avec la figure 2.

Le motif créé est par exemple de longueur minimale M = N*P+(N-1)*I, avec I la longueur du champ de donnée, P la longueur d'un champ pilote P et N le nombre de séquences pilotes différentes dans la trame. Cette longueur correspond à la fenêtre temporelle minimale pour voir une séquence pilote de synchronisation complète non réinitialisée. Dans ce mode de réalisation de l'invention ou P=80 et N=2 et I=1008, le motif est de longueur minimale 1168.

Le motif débute de préférence à la position correspondant au premier symbole de la première séquence pilote de synchronisation (c'est-à-dire que le motif débute au premier symbole de P1). Pour les positions correspondants aux positions des symboles pilotes, le symbole du motif est construit en appliquant la même transformation appliquée au signal reçu (étape de transformation du procédé de l'invention, voir 7.2.2).

De préférence le *nombre complexe* issu de la transformation est égal au produit du symbole pilote par le conjugué du symbole précédent de la séquence pilote de synchronisation. Si le symbole précédent est un symbole d'information, dans cette situation, le symbole du motif est de préférence « 0 ». Sur les positions correspondantes au champ de donnée, les symboles du motif sont de préférence de valeurs nulles.

Selon l'invention, ce motif a de bonnes propriétés d'intercorrélation. A titre illustratif, on présente en relation avec la figure 3 la fonction d'intercorrélation du motif lorsque la séquence pilote de synchronisation complexe est construite à partir d'une séquence de gold de longueur $2^{18}$-1 (tel que présenté précédemment).

7.2.4 <u>Mise en oeuvre du procédé dans ce mode de réalisation particulier</u>

Selon l'invention, le procédé comprend une phase de synchronisation temporelle dite initiale, et une phase de synchronisation temporelle dite suivie.

Le symbole reçu « r » est suréchantillonné d'un facteur $K$, de préférence $K=4$, apportant un rythme d'échantillonnage $Te=Ts/K$, et une séquence de symboles reçus au rythme $Te$, $r(jTe)$, dans lequel $j \in [0,1,2,3]$.

Les étapes de la phase de synchronisation initiale selon l'invention sont alors les suivantes :

- **1.** construction du motif. Le motif est créé en utilisant les équations de la figure 4 avec des séquences pilotes P0, P1 définies préalablement (c.f. 7.2.1), P=80, N=2,1=1008.
- **2.** la transformation illustrée par l'équation de transformation (c.f. 7.2.2) fournit une nouvelle séquence $X()$ construite en multipliant le symbole reçu « r » par le symbole conjugué retardé de $Ts$

Ensuite, à partir d'un temps T0 arbitraire, cette phase de synchronisation initiale comprend les étapes suivantes :

- **3.** Pour chaque $Te$ correspondant au temps $T0+pTe$, calcul d'une quantité $R$, sur une fenêtre des $M$ symboles $X$ $(T0+pTe+jTs)$ avec $M=N*P+(N-1)*I$ (soit 1168 quand N=2) de préférence, somme des modules des produits de $M$ symboles de la séquence reçue pris tous les $K$ symboles et les symboles conjugués du motif sur les longueurs des paquets de symboles pilotes, le module étant la norme ou la norme au carré complexe. Ce calcul est représenté par la formule suivante :

$$R = \sum_{j=1}^{P} \left\| X(T0 + pTe + jTs) * conjugueMotif(j) \right\|^{puissance} +$$

$$\sum_{j=P+I+1}^{P+I+P} \left\| X(T0 + pTe + jTs) * conjugueMotif(j) \right\|^{puissance} \quad puissance = 1 \ ou \ 2$$

- **4.** Pour chaque $Te$, sommer la quantité $R$ précédemment calculée avec la valeur calculée $N(P+I)*K$ Te précédente pour obtenir une quantité $RT$. Cette quantité est par exemple stockée dans une mémoire sous la forme d'un tableau de $K$ lignes et $N(P+I)$ colonnes à la position de la $N(P+I)*K$ valeur précédente. Lorsque « Nrep » fois toutes les données mémorisées ont été modifiées, passer à l'étape suivante.
- **5.** Pour chaque ligne du tableau précédent, déterminer la valeur maximale stockée. A chaque valeur maximale $RT$ de chaque ligne correspond à un candidat, est associée un seuil « Scand » égal à cette valeur maximale divisée par (P-1), une position égale au numéro de la colonne correspondant à la valeur maximale, et un numéro de lignes,
- **6.** Recommencer les étapes 3 à 5 pour déterminer K*Nrep candidats. On ne retient que les candidats dont le seuil « Scand » est supérieur à une valeur fixée S0.
- **7.** Parmi les candidats retenus, on effectue une règle dite de modulo en associant de préférence en sous ensembles les positions avec le même modulo $N*(P+I)$. On retient alors de préférence les candidats dont les positions sont dans le sous-ensemble avec le plus d'éléments. S'il n'y a pas de sous ensemble avec plus de 1 élément, alors la phase de synchronisation temporelle est réinitialisée. On déterminer ensuite la quantité maximale parmi les quantités $RT$ pour les candidats retenus. La position ligne associée à cette quantité maximale donne quel échantillon noté « numéro_echantillon » parmi les $K$ échantillons du symbole reçu (numéro_echantillon $\in [0,k-1]$)il faut retenir pour démoduler. Les instants d'échantillonnage sont alors $T0+$ numéro_echantillon*Te+m*Ts. (m $\in [0,P-1]$). A cette valeur maximale est automatiquement associée le début du motif DMOTIF fourni par la position de la colonne associée à cette valeur maximale.

Selon l'invention, lors de la phase de suivi de synchronisation temporelle, le procédé permet de corriger l'instant choisi d'échantillon de manière progressive en prenant un échantillon voisin de l'échantillon courant choisi.

Cette phase de suivi de synchronisation temporelle débute par la création de trois compteurs *compt(j)* avec *j=0, +1, -1* initialisés de préférence à 0 et comporte les étapes suivantes :

- **8.** A partir du début du motif *DMOTIF*, trois calculs de la quantité *R : R(0), R(+1) et R(-1)*, de préférence en parallèle, sont effectués tous les *M\*Ts* (c'est-à-dire à intervalle régulier). Pour la quantité *R(0)*, les *M* symboles de la séquence *X()* sont ceux pris à partir du début du motif au temps échantillonnage : *X(DMOTIF+j\*Ts)*, pour la quantité *R(+1)*, les *M* symboles de la séquence *X()* sont ceux pris à partir du début du motif au temps échantillonnage mais décalé positivement d'un temps *Te* : *X(DMOTIF+j\*Ts+Te)*, pour la quantité *R(-1)*, les *M* symboles de la séquence *X()* sont ceux pris à partir du début du motif au temps échantillonnage mais décalé négativement d'un temps *Te* : *X(DMOTIF+j\*Ts-Te)*.
  Chaque quantité *R(q)*, *q=0, +1, -1* est calculée *N_DMOTIF* fois pour *N_DMOTIF* séquences *X()* dont le premier symbole de la séquence *X* débute à un multiple de *M* à partir de *DMOTIF*, de préférence tous les *DMOTIF+ mult\*N\* (P+I)*, « *mult* » étant une variable prenant toutes les valeurs entières entre *0* et *N_DMOTIF-1*.
  Pour chaque quantité *R(q)*, les *N_DMOTIF* valeurs sont cumulées avec ou sans pondération, de préférence sans pondération, pour obtenir les quantités *RT(q,max)*.
- **9.** Calculer le maximum entre les trois quantités *RT(0)*, *RT(+1)* et *RT(-1)*, augmenter de +1 le compteur correspondant à l'indice apportant le maximum, répéter les étapes 1 à 3 sur « *N_fenêtre* » fenêtres dont le début de la fenêtre est choisi à un temps *T* donné par *T=DMOTIF+ nb\*M* avec « *nb* » à choisir en fonction des conditions, de préférence à nb=N_DMOTIF, et réinitialiser à *0* les trois quantités *RT(0), RT(+1) et RT(-1)*.
- **10.** Répéter « *N_fenêtre* » fois les étapes 8 et 9. Ensuite, examiner les 3 compteurs. Si la valeur de l'un des compteurs *compt(j0)* est supérieure ou égale à un seuil de préférence *N_fenêtre/2* ou *N_fenêtre\*2/3*, modifier l'instant d'échantillonnage par *(instant_echantillonnage+j0) \*Te*, réinitialiser les compteurs. Sinon, on ne modifie pas l'instant d'échantillonnage.
- **11.** Les étapes 8, 9, 10 précédentes sont effectuées en continue pour assurer une synchronisation temporelle constante.

7.3 <u>Mise en oeuvre du procédé dans une chaîne de démodulation</u>

Dans un premier exemple de chaîne de démodulation, le procédé de l'invention peut être mis en oeuvre derrière un filtre numérique de réception lorsque le rapport entre l'écart fréquentiel accepté au récepteur, dû au décalage entre les oscillateurs émetteur récepteur et au décalage causé par le Doppler maximal, et la largeur de bande du signal émis est inférieur à 1/10. Ceci est généralement le cas pour des bandes de signal comprises entre 5 MHz et 8 MHz, à des fréquences porteuses d'environ 2 GHz.

L'algorithme de calage fréquentiel peut alors tirer partie des informations en sortie issues du procédé de synchronisation temporelle de l'invention et notamment la position du début de motif. Il est alors possible d'utiliser un algorithme de synchronisation fréquentielle qui utilisera les données déduites du critère du maximum de vraisemblance.

Dans un deuxième exemple de chaîne de démodulation, le procédé de l'invention peut être mis en oeuvre en amont d'un module d'estimation de fréquence grossière lorsque le décalage fréquentiel est de l'ordre de la largeur de bande du signal émis, sinon plus.

**Revendications**

1. Procédé de synchronisation temporelle d'un signal numérique dans un système de communication par trames, chacune desdites trames comprenant des symboles d'information et au moins deux séquences de symboles de pilotes de synchronisation périodique,
   ledit procédé étant **caractérisé en ce qu'**il comprend une phase de synchronisation comprenant les étapes suivantes :

   - suréchantillonnage d'un signal reçu, suivant un facteur de suréchantillonage *K*, délivrant *K* échantillons de durée *Te* pour un temps symbole *Ts* ;
   - obtention d'une information de sélection pour chaque échantillon, à l'aide d'une fonction prédéterminée *X()* tenant compte dudit échantillon et d'au moins un échantillon reçu précédemment ;
   - comparaison desdites informations de sélection avec un motif de référence connu *Mo* et
   - sélection de l'instant d'échantillonnage d'un desdits échantillons comme point de synchronisation, en fonction des résultats desdites comparaisons ;

lesdites séquences étant prédéfinies, à l'émission, de façon que leur combinaison à l'aide de ladite fonction maximise au moins une caractéristique de ladite information de sélection, lorsque la synchronisation est correcte.

2. Procédé de synchronisation selon la revendication 1, **caractérisé en ce que** pour chaque échantillon :

- ladite fonction prédéterminée *X()* comprend une étape de multiplication dudit échantillon par le conjugué d'un échantillon précédent, délivrant un échantillon transformé ;
- ladite étape de comparaison comprend une étape de calcul d'une corrélation entre ledit échantillon transformé et ledit motif préalablement connu *Mo*.

3. Procédé de synchronisation selon la revendication 2, **caractérisé en ce que** ladite phase de synchronisation comprend en outre une étape de cumul de desdites corrélations correspondant à au moins deux temps symbole successifs, au sein d'une structure de données de cumul de corrélation stockant des quantités *RT* de corrélations cumulées pour chaque échantillon, et **en ce que** ladite étape de sélection tient compte desdites quantités *RT*.

4. Procédé de synchronisation selon l'une quelconque des revendications 1 à 3, **caractérisé en ce que** pour chaque échantillon à un temps d'échantillonnage *Te* ladite fonction prédéterminée *X()* vaut :

$$X(nTe) = r(nTe) * conjugue(r(nTe - xTs)$$

où :

- *r(nTe)* est le nième échantillon reçu au temps *Te* ;
- *r(nTe-xTs)* est le nième échantillon reçu au temps Te retardé d'une valeur entière x fois le temps *Ts*.

5. Procédé de synchronisation selon la revendication 4 **caractérisé en ce que** ladite valeur de retard *x* vaut 1.

6. Procédé de synchronisation selon l'une quelconque des revendications 2 à 4, **caractérisé en ce que** pour un échantillon donné, ladite corrélation est une enveloppe de corrélation d'un nombre complexe.

7. Procédé de synchronisation selon l'une quelconque des revendications 1 à 6 **caractérisé en ce qu'**il comprend en outre une phase de contrôle de synchronisation en continu par estimation en utilisant lesdits symboles d'information et ledit instant d'échantillonnage préalablement déterminé.

8. Procédé de synchronisation selon la revendication 7, **caractérisé en ce que** ladite phase de contrôle de synchronisation par estimation comprend les étapes suivantes :

- suréchantillonnage d'un signal reçu, suivant un facteur de suréchantillonage *K*, délivrant au moins deux échantillons à un temps d'échantillonnage *Te* pour une durée correspondant à un temps symbole *Ts* ;
- obtention d'une information de sélection pour chaque échantillon, à l'aide d'une fonction prédéterminée *X()* tenant compte dudit échantillon et d'au moins un échantillon reçu précédemment ;
- comparaison desdites informations de sélection avec un motif de référence connu *Mo* et
- sélection de l'instant d'échantillonnage d'un desdits échantillons comme point de synchronisation, en fonction des résultats desdites comparaisons et dudit instant d'échantillonnage préalablement déterminé.

9. Signal numérique destiné à être émis par au moins un émetteur et reçu par au moins un récepteur mettant en oeuvre le procédé de synchronisation selon l'une quelconque des revendications 1 à 8, dans un système de communication par trames, chacune desdites trames comprenant des symboles d'information et au moins deux séquences de symboles pilotes de synchronisation *P0* et *P1*,
**caractérisé en ce que** lesdites séquences de symboles pilotes de synchronisation *P0* et *P1* sont choisies de façon qu'elles maximisent un résultat d'un calcul de corrélation entre des échantillons desdits symboles de pilotes et un motif de référence connu *Mo* à l'aide d'une fonction prédéterminée *X()* et **en ce que** pour chaque échantillon à un temps d'échantillonnage *Te* ladite fonction prédéterminée *X()* vaut :

$$X(nTe) = r(nTe) * conjugue(r(nTe - xTs)$$

où :

- $r(nTe)$ est le nième échantillon reçu au temps $Te$ ;
- $r(nTe-xTs)$ est le nième échantillon reçu au temps Te retardé d'une valeur entière x fois le temps $Ts.$

**10.** Procédé de construction d'un signal numérique selon la revendication 9, dans un système de communication par trames, chacune desdites trames comprenant des symboles d'information et au moins deux séquences de symboles de pilotes de synchronisation P0 et P1,
ledit procédé étant **caractérisé en ce qu'**il comprend une étape de détermination desdites séquences de symboles pilotes de synchronisation P0 et P1 de façon qu'elles maximisent un résultat d'un calcul de corrélation entre des échantillons desdits symboles de pilotes et un motif de référence connu $Mo$ à l'aide d'une fonction prédéterminée.

**11.** Procédé de construction selon la revendication 10, **caractérisé en ce que** ladite étape de détermination met en oeuvre le calcul suivant :

$$p0, n = \exp(j\pi / 4) * Cn \quad 1 \le n \le P$$

$$p1, n = \exp(j\pi / 4) * Cn \quad P + I + 1 \le n \le P + I + P$$

dans lequel :

- « P » est le nombre de symboles qui composent respectivement les symboles $P0$ et $P1$ ;
- « I » est le nombre de symboles de données d'information d'une trame ;
- « $C_n$ » est le $n^{ième}$ symbole complexe d'une séquence déduite d'une séquence de Gold de longueur $2^{18}$-1 ;
- « j » étant la notation imaginaire d'un nombre complexe.

**12.** Dispositif de synchronisation temporelle d'un signal numérique dans un système de communication par trames, chacune desdites trames comprenant des symboles d'information et au moins deux séquences de symboles de pilotes de synchronisation,
ledit dispositif étant **caractérisé en ce qu'**il comprend des moyens de synchronisation comprenant des moyens de :

- suréchantillonnage d'un signal reçu, suivant un facteur de suréchantillonage $K$, délivrant au moins deux échantillons à un temps d'échantillonnage $Te$ pour une durée correspondant à un temps symbole $Ts$ ;
- obtention d'une information de sélection pour chaque échantillon, à l'aide d'une fonction prédéterminée $X()$ tenant compte dudit échantillon et d'au moins un échantillon reçu précédemment ;
- comparaison desdites informations de sélection avec un motif de référence connu $Mo$ et
- sélection de l'instant d'échantillonnage d'un desdits échantillons comme point de synchronisation, en fonction des résultats desdites comparaisons.

**13.** Produit programme d'ordinateur téléchargeable depuis un réseau de communication et/ou stocké sur un support lisible par ordinateur et/ou exécutable par un microprocesseur, **caractérisé en ce qu'**il comprend des instructions de code de programme pour l'exécution du procédé de synchronisation selon l'une au moins des revendications 1 à 8, lorsqu'il est exécuté sur un ordinateur.

Train (Ts)                                          Train (Tc)

| Sur échantillonnage du signal reçu d'un facteur K | | Transformée différentielle du signal par multiplication de deux complexes décalés d'un multiple de Ts |

(1)                                                 (2)

| Calcul de K corrélations partielles chaque Ts entre le signal transformé et le motif | | Calcul des modules de ces corrélations |

(3)                                                 (4)

| motif |

| Sommer les modules pour obtenir des quantités RT | | Cumuler des quantités RT séparées d'un multiple de Ts |

(5)                                                 (6)

| Comparer les quantités cumulées | | Candidat instant d'échantillonnage et début du motif |

(7)                                                 (8)

| Seuil (Scandidat=Scand) |

# Figure 1

trame

| P0,1 P0,2… P0,Q1 | S1S2…SI1 | P1,1 P1,2 ….P1,Q2 | | PN,1 PN,2 ….PN,QM | S1S2…SIM | P0,1 P1,2 ….P0,Q1 |

trame :
   champs pilotes(P) et champs données(S)
   QM champs pilotes avant répétition
   Champs données de longeur I1,..MI

motif

| M0,1M0,2… M0,Q1 | M=0…0 | M1,1 ……..M1,Q2 | | MN,1 …….PN,QM | | (9) |

Règle de construction du motif :
   decal entier connu
      M=0 aux positions S                                    (10)
      MI,1=MI,2=…=MI,decal=0 pour 0<=I<=N                     (11)
   MI,J=PI,J*conjugue(MI,decal) J=decal+1,….,                (12)

# Figure 2

## Figure 3

| P0 | Data1 | P1 | Data2 | P0 | Data3 | P1 |
|----|-------|----|-------|----|-------|----|

définition de trame pour N=2, deux séquences pilotes P0 et P1

## Figure 4

Europäisches
Patentamt

European
Patent Office

Office européen
des brevets

**RAPPORT PARTIEL
DE RECHERCHE EUROPEENNE**
qui selon la règle 63 de la Convention sur le brevet
européen est consideré, aux fins de la procédure ultérieure,
comme le rapport de la recherche européenne

Numéro de la demande

EP 09 16 4950

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | US 5 555 247 A (MATSUOKA AKIHIKO [JP] ET AL) 10 septembre 1996 (1996-09-10) <br> * abrégé; revendications 1,2; figures 8,10 * <br> * colonne 5, ligne 25 - ligne 45 * <br> * colonne 10, ligne 12 - ligne 55 * <br> * colonne 15, ligne 61 - colonne 16, ligne 23 * <br> * colonne 18, ligne 3 - colonne 19, ligne 24 * <br> ----- | 1-8, 12-13 | INV. <br> H04L7/04 <br><br> ADD. <br> H04L7/08 <br> H04L7/10 |
| X | WO 2004/030268 A (INFINEON TECHNOLOGIES AG [DE]; MARSILI STEFANO [AT]) 8 avril 2004 (2004-04-08) <br> * abrégé; figure 7 * <br> * page 3, ligne 2 - ligne 27 * <br> * page 4, ligne 2 - page 5, ligne 23 * <br> * page 7, ligne 20 - page 8, ligne 14 * <br> * page 8, ligne 30 - page 9, ligne 6 * <br> * page 12, ligne 27 - page 13, ligne 28 * <br> ----- <br> -/-- | 1-8, 12-13 | |
| | | | **DOMAINES TECHNIQUES RECHERCHES (IPC)** <br><br> H04L |

## RECHERCHE INCOMPLETE

La division de la recherche estime que la présente demande de brevet, ou une ou plusieurs revendications, ne sont pas conformes aux dispositions de la CBE au point qu'une recherche significative sur l'état de la technique ne peut être effectuée, ou seulement partiellement, au regard de ces revendications.

Revendications ayant fait l'objet d'une recherche complète:

Revendications ayant fait l'objet d'une recherche incomplète:

Revendications n'ayant pas fait l'objet d'une recherche:

Raison pour la limitation de la recherche:

voir feuille supplémentaire C

| Lieu de la recherche | Date d'achèvement de la recherche | Examinateur |
|---|---|---|
| Munich | 30 octobre 2009 | Wolters, Robert |

CATEGORIE DES DOCUMENTS CITES

X : particulièrement pertinent à lui seul
Y : particulièrement pertinent en combinaison avec un
  autre document de la même catégorie
A : arrière-plan technologique
O : divulgation non-écrite
P : document intercalaire

T : théorie ou principe à la base de l'invention
E : document de brevet antérieur, mais publié à la
  date de dépôt ou après cette date
D : cité dans la demande
L : cité pour d'autres raisons
......................................................................
& : membre de la même famille, document correspondant

EPO FORM 1503 03.82 (P04E08)

Europäisches
Patentamt

European
Patent Office

Office européen
des brevets

**RAPPORT PARTIEL
DE RECHERCHE EUROPEENNE**

Numero de la demande

EP 09 16 4950

| | DOCUMENTS CONSIDERES COMME PERTINENTS | | CLASSEMENT DE LA DEMANDE (IPC) |
|---|---|---|---|
| Catégorie | Citation du document avec indication, en cas de besoin, des parties pertinentes | Revendication concernée | |
| A | US 2007/248195 A1 (LERNER GREGORY [IL] ET AL) 25 octobre 2007 (2007-10-25) * abrégé; figures 4,6 * * alinéas [0006], [0007], [0020] - [0022], [0026] - [0028], [0030] * ----- | 1-8, 12-13 | |
| A | US 2006/062335 A1 (LEE JAE-YONG [KR] ET AL) 23 mars 2006 (2006-03-23) * abrégé; revendications 1-5; figures 3,4,6 * * alinéas [0010] - [0014], [0024] - [0028] * ----- | 1-8, 12-13 | |
| | | | DOMAINES TECHNIQUES RECHERCHES (IPC) |

EPO FORM 1503 03.82 (P04C11)

Europäisches
Patentamt

European
Patent Office

Office européen
des brevets

**RECHERCHE INCOMPLETE**

**FEUILLE SUPPLEMENTAIRE C**

Numéro de la demande

EP 09 16 4950

---

Revendications susceptibles de faire l'objet de recherches complètes:
        1-8, 12-13

Revendications n'ayant pas fait l'objet de recherches:
        9-11

Raison pour la limitation de la recherche (invention(s) non brevetable(s)):

Une recherche significative n'est pas possible au regard de toutes les revendications parce que celles-ci ont trait à Article 52 (2)(a) CBE - Méthode mathématique


        -----

Limitation additionnelle de la recherche

Revendications susceptibles de faire l'objet de recherches complètes:
        1-8, 12-13

Revendications n'ayant pas fait l'objet de recherches:
        9-11

Raison pour la limitation de la recherche:

Les revendications 9-11 présente ont trait à un composé et une méthode qui sont définis en faisant référence à un effet ou une propriété souhaitable, à savoir un signal numérique et une méthode de construction ledit signal numérique. Cependant, la description ne fournit aucun fondement et exposé au sens des articles 84 et 83 CBE pour un tel composé ou une telle méthode possédant cet effet ou propriété, et l'homme du métier n'a pas à sa disposition de connaissances générales lui permettant de l'obtenir. La non-conformité avec les exigences quant au fond est telle qu'une recherche significative portant sur l'ensemble de l'objet revendiqué n'a pas pu être effectuée (règle 63 CBE et Directives B-VIII, 3).
En conséquence, la recherche n'a été effectuée que pour les parties des revendications dont l'objet apparaît être clair, fondé et suffisamment exposé, à savoir les parties concernant les revendications indépendantes 1, 12 et 13 (et les revendications dependantes associé avec lesdits revendications indépendantes): un procédé, un dispositif et du software de la synchronisation temporelle d'un signal numérique dans un système de communications par trames.

**ANNEXE AU RAPPORT DE RECHERCHE EUROPEENNE**
**RELATIF A LA DEMANDE DE BREVET EUROPEEN NO.**

EP 09 16 4950

La présente annexe indique les membres de la famille de brevets relatifs aux documents brevets cités dans le rapport de
recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

30-10-2009

| Document brevet cité<br>au rapport de recherche | | Date de<br>publication | Membre(s) de la<br>famille de brevet(s) | Date de<br>publication |
|---|---|---|---|---|
| US 5555247 | A | 10-09-1996 | AUCUN | |
| WO 2004030268 | A | 08-04-2004 | CN      1685655 A<br>DE    10245047 A1<br>EP      1543647 A1 | 19-10-2005<br>08-04-2004<br>22-06-2005 |
| US 2007248195 | A1 | 25-10-2007 | AUCUN | |
| US 2006062335 | A1 | 23-03-2006 | CN      1758640 A<br>DE 602005004344 T2<br>EP      1638283 A1<br>JP      4256373 B2<br>JP    2006087122 A<br>KR    20060025769 A | 12-04-2006<br>22-01-2009<br>22-03-2006<br>22-04-2009<br>30-03-2006<br>22-03-2006 |

EPO FORM P0460

Pour tout renseignement concernant cette annexe : voir Journal Officiel de l'Office européen des brevets, No.12/82